# EUROPEAN PATENT SPECIFICATION

(11) **EP 2 020 173 B1**
(45) Date of publication and mention of the grant of the patent: **25.08.2010**
(21) Application number: 08161209.5
(22) Date of filing: 25.07.2008
(51) Int. Cl.: A01D 43/06

(54) **Device for controlling the passage of the grass in a collecting tunnel of a lawnmower and corresponding lawnmower**
Vorrichtung zur Steuerung des Durchlaufs von Gras in einem Sammeltunnel eines Rasenmähers und entsprechender Rasenmäher
Dispositif de contrôle du passage de l'herbe dans un tunnel collecteur d'une tondeuse à gazon et tondeuse à gazon correspondante

(30) Priority: 01.08.2007 IT MI20071587
(43) Date of publication of application: 04.02.2009
(73) Proprietor: GGP Italy S.p.A., 31033 Castelfranco Veneto (TV) (IT)
(72) Inventor: Tosato, Pierluigi, 37128, Verona (IT)
(74) Representative: Mittler, Enrico

(56) References cited:
- FR-A- 2 750 005
- US-A- 4 964 266
- US-A- 5 060 459
- US-A- 5 321 939
- US-A- 5 325 650

## Description

The present invention relates to a device for controlling the passage of the grass in a collecting tunnel of a lawnmower and the corresponding lawnmower.

In the prior art, lawnmowers are known that are provided with an apparatus for collecting the cut grass, The apparatus comprises a conveyor or grass-collecting tunnel the task of which is to convey the grass to a collecting container.

Lawnmower are known that have containers for collecting the grass that are provided with a sensor for detecting filling of the container, as disclosed in patent US 4964266 in which the sensor is arranged in the collecting mouth of the container.

Another lawnmower with a container for collecting the grass is disclosed in patent US 5321939. Also this lawnmower is provided with a sensor for detecting filling of the container. The sensor is a light sensor with a light receiver and a light emitter arranged on opposite sides; the sensor is suitable for detecting filling of the container when the interruption of the passage of light between the light emitter and light receiver of the sensor continues for a time period that is longer than a preset time period.

In view of the prior art, the object of the present invention is to provide a device for controlling the passage of the grass in a collecting tunnel of a lawnmower that is different from known ones.

According to the present invention, said object is achieved by a device for detecting the passage of the grass in a collecting tunnel of a lawnmower, said lawnmower comprising at least a cutting blade and a container and said tunnel being suitable for conveying the cut grass to said container, characterised in that it comprises at least a pair of sensitive elements that are sensitive to the humidity of the grass, the elements of said pair of sensitive elements being arranged opposite one another inside the tunnel and being supplied electrically, said at least a pair of sensitive elements generating a detecting signal when a quantity of wet grass covers said at least a pair of sensitive elements so as to form an electric path between the sensitive elements of the pair.

The features of the present invention will be clearer from the following description of a practical embodiment thereof, illustrated by way of nonlimiting example in the attached drawings, in which:
Figure 1 is a schematic view of a lawnmower with a grass-collecting tunnel and container in which the tunnel is provided with a device for controlling the passage of the grass according to the present invention;
Figure 2 is a vertical section view of the tunnel of a lawnmower provided with the device for controlling the passage of the grass according to the present invention;
Figure 3 is a more detailed vertical section view of the tunnel in figure 2;
Figure 4 is a top view of the tunnel in figure 3;
Figure 5 is a block diagram of the device for controlling the passage of the grass according to the present invention.

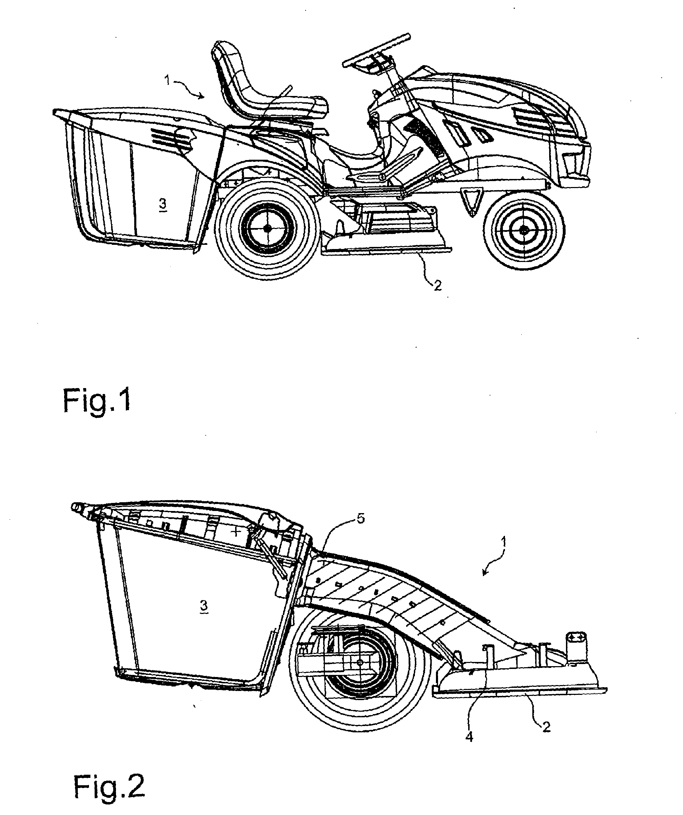

In figure 1 there is shown a ride-on mower provided with a tunnel 1 for collecting grass with a device for controlling the passage of the grass according to the present invention. The ride-on lawnmower is provided with at least one grass-cutting blade 2 and with a container 3 of the cut and collected grass.

The tunnel 1 for collecting the grass, which is shown is more detail in Figure 2, can have a circular, square, rectangular or still other section and has an opening 4 arranged near the cutting blade and another opening 5 connected to the corresponding opening of the container 3; the grass cut by the blade 2, is sucked through the tunnel 1 and is collected in the container 3.

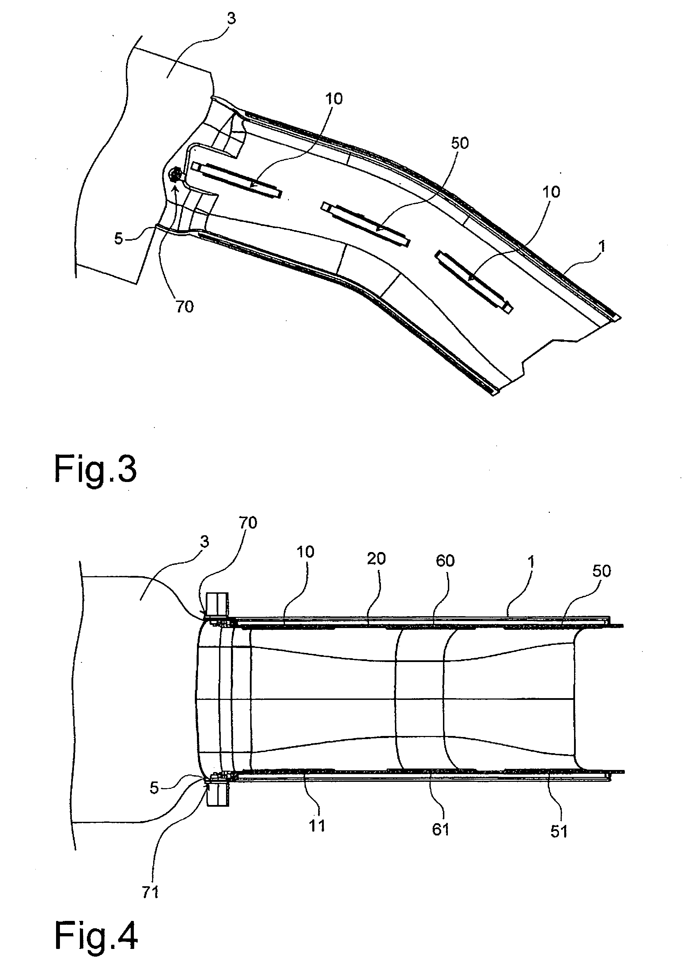

The tunnel 1 is provided with a device for controlling the passage of the grass comprising at least a pair of elements 10, 11, 50, 51, 60, 61 that are sensitive to the humidity of the grass, as visible in Figures 3 and 4; the elements 10-11, 50-51, 60-61 are arranged opposite one another inside the tunnel, preferably attached to the inner wall 20 of the tubular-shaped tunnel 1. The sensitive elements 10-11, 50-51, 60-61 are electrodes that are supplied electrically and are suitable for generating a detecting signal IR1-IR3 when a quantity of grass covers the at least a pair of sensitive elements 10-11, 50- 51, 60-61 so as to create an electric path between the sensitive elements of the pair, i.e. conduct current between the elements and the quantity of grass arranged therebetween.

The sensitive elements 10-11, 50- 51, 60-61 are preferably attached to the internal tubular wall 20 of the collecting tunnel 1.

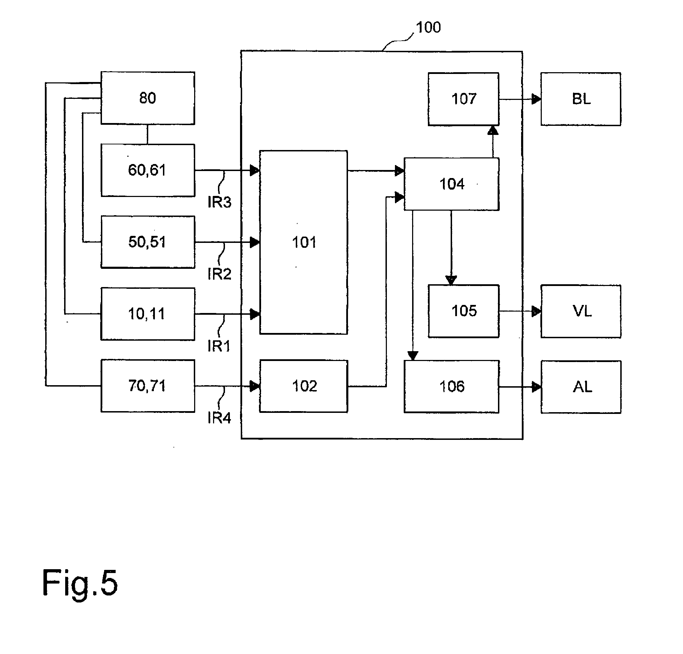

The sensitive elements 10-11, 50- 51, 60-61 preferably consist of electrodes made of stainless steel or other electrically conductive material and supplied electrically by a supplying device 80, shown in Figure 5.

Each pair of sensitive elements 10-11, 50-51, 60-61 can be employed to detect filling of the container 3 or for detecting a stoppage in the tunnel 1.

For example, the elements 10 and 11 are arranged adjacent to the opening 5 and therefore near the container 3. The sensitive elements 10, 11 generate a detecting signal IR1 when they are covered by a quantity of grass; more precisely the sensitive elements 10, 11 detect the filling of the container 3 when the container is full of cut grass and a certain quantity of wet grass is arranged therebetween so that it can conduct electricity between the element 10 and the element 11. The device comprises means 100 suitable for emitting an alarm signal AL or VL in response to the detecting signal IR1.

The device for controlling the passage of the grass in the tunnel 1 preferably comprises the pairs of sensitive elements 50, 51, 60, 61, and 70, 71 for detecting stoppages in the tunnel 1. The pairs of elements 50, 51 and 60, 61 are sensitive elements that are sensitive to the humidity of the grass; the sensitive elements 50, 51 are arranged opposite one another inside the tunnel, preferably attached to the inner wall 20 of the tubular shaped tunnel 1, just like the sensitive elements 60, 61, and preferably consist of electrodes made of stainless steel.

The sensitive elements 70, 71 constitute an infrared sensor comprising two diodes, a transmitting diode 70 and a receiving diode 71, located on opposite sides of the opening 5 of the tunnel 1 that is in communication with the corresponding opening of the container 3.

The pairs of sensitive elements 50, 51 and 60, 61 detect the conductivity of the grass by reading the humidity contained therein, when a certain quantity of wet grass is arranged between the elements 50 and 51 or between the elements 60 and 61 so that it can conduct electricity the stoppage in the tunnel is detected in the position in which the respective pair of sensitive elements is located. The pair of sensitive elements 50, 51 and the pair 60, 61 generate a detecting signals IR2 and IR3.

Detecting stoppages in the tunnel can also occur by means of the sensor 70, 71; in fact, if the grass is deposited at the sensitive elements 70, 71 the infrared ray moving between the elements 70 and 71 is interrupted. The pair of sensitive elements 70, 71 generates in this case a detecting signal IR4.

The means 100 of the device is suitable for emitting an alarm signal A1, VL in response to the detecting signal IR1 or IR2.

The means 100, which is more visible in Figure 5, comprises a device 101 that is suitable for processing the detection signals IR1, IR2, IR3 and a device 102 suitable for processing the detecting signal IR4. The output signals of the devices 101 and 102 are processed by a microprocessor 104 that commands the drivers 105, 106 and 107. The driver 105 is suitable for generating a visual alarm VL in response to one of the signals IR1-IR4 coming from the sensors whilst the driver 106 is suitable for generating an acoustic alarm AL in response to one of the signals IR1-IR4 coming from the sensors. The driver 107 is suitable for generating a signal BL to stop the cutting blade 2 in response to one of the signals IR1-IR4 deriving from the sensors.

## Claims

1. Device for detecting the passage of the grass in a collecting tunnel (1) of a lawnmower, said lawnmower comprising at least a cutting blade (2) and a container (3) and said tunnel being suitable for conveying the cut grass to said container, **characterised in that** it comprises at least a pair of sensitive elements (10-11, 50-51, 60-61) that are sensitive to the humidity of the grass, the elements of said pair of sensitive elements (10-11, 50-51, 60-61) being arranged opposite one another inside the tunnel and being supplied electrically (80), said at least a pair of sensitive elements (10-11, 50-51, 60-61) generating a detecting signal (IR1-IR3) when a quantity of wet grass covers said at least a pair of sensitive elements so as to form an electric path between the sensitive elements of the pair.

2. Device according to claim 1, **characterised in that** the sensitive elements of said at least a pair (10-11, 50-51, 60-61) are two metal electrodes made of electrically conductive material.

3. Device according to claim 2, **characterised in that** the elements of said at least a pair (10-11, 50-51, 60-61) of sensitive elements are made of stainless steel.

4. Device according to claim 1, **characterised in that** said tunnel (1) has a tubular shape and the sensitive elements of said at least a pair of sensitive elements (10-11, 50-51, 60-61) are attached to the inner wall (20) of said tunnel (1).

5. Device according to claim 1, **characterised in that** said tunnel comprises an opening (5) is correspondance of the opening of the container (3), said at least a pair of sensitive elements (10, 11) being arranged adjacent to said opening (5).

6. Device according to claim 1, **characterised in that** it comprises at least two pairs of sensitive elements (50-51, 60-61) arranged in various positions in the tunnel (1) and suitable for emitting single detection signals (IR2, IR3).

7. Device according to claim 1, **characterised in that** it comprises means (100) suitable for emitting an alarm signal (AL, VL) in response to the detecting signal (IR1-IR3) generated by said at least a pair of sensitive elements (10-11, 50-51, 60-61).

8. Device according to claim 1, **characterised in that** it comprises means (100) suitable for emitting a signal (BL) for locking the cutting blade (2) in response to the detecting signal (IR1-IR3) generated by said at least a pair of sensitive elements (10-11, 50-51, 60-61).

9. Lawnmower comprising a grass-cutting blade (2), a container (3) and a tunnel (1) for conveying the cut grass into the container (3), said lawnmower comprising a device for detecting the passage of the grass in the tunnel as defined in any preceding claim.

## Patentansprüche

1. Vorrichtung zum Erfassen des Grasdurchgangs in einem Sammeltunnel (1) eines Rasenmähers, wobei der Rasenmäher zumindest eine Schneidklinge (2) und einen Behälter (3) und den Tunnel aufweist, der dazu geeignet ist, das geschnittene Gras zu dem Behälter zu befördern; **dadurch gekennzeichnet, dass** sie zumindest ein Paar von empfindlichen Elementen (10-11, 50-51, 60-61) aufweist, die für die Feuchtigkeit des Grases empfindlich sind, die Elemente des Paars von empfindlichen Elementen (10-11, 50-51, 60-61) einer anderen Innenseite des Tunnels gegenüberliegend angeordnet sind und elektrisch versorgt (80) sind, und das zumindest eine Paar von empfindlichen Elementen (10-11, 50-51, 60-61) ein Erfassungssignal (IR1-IR3) erzeugt, wenn eine Menge von nassem Gras das zumindest eine Paar von empfindlichen Elementen bedeckt, um so zwischen den empfindlichen Elementen des Paars einen elektrischen Pfad zu bilden.

2. Vorrichtung gemäß Anspruch 1, **dadurch gekennzeichnet, dass** die empfindlichen Elemente des zumindest einen Paars (10-11, 50-51, 60-61) zwei Metallelektroden sind, die aus elektrisch leitfähigem Material hergestellt sind.

3. Vorrichtung gemäß Anspruch 2, **dadurch gekennzeichnet, dass** die Elemente des zumindest einen Paars (10-11, 50-51, 60-61) von empfindlichen Elementen aus nicht rostendem Stahl hergestellt sind.

4. Vorrichtung gemäß Anspruch 1, **dadurch gekennzeichnet, dass** der Tunnel (1) eine Röhrenform hat und die empfindlichen Elemente des zumindest einen Paars von empfindlichen Elementen (10-11, 50-51, 60-61) an der inneren Wand (20) des Tunnels (1) angebracht sind.

5. Vorrichtung gemäß Anspruch 1, **dadurch gekennzeichnet, dass** der Tunnel eine Öffnung (5) aufweist, die übereinstimmend mit der Öffnung des Behälters (3) ist, wobei zumindest ein Paar von empfindlichen Elementen (10, 11) benachbart der der Öffnung (5) angeordnet ist.

6. Vorrichtung gemäß Anspruch 1, **dadurch gekennzeichnet, dass** sie zumindest zwei Paare von empfindlichen Elementen (50-51, 60-61), die an verschiedenen Positionen in dem Tunnel (1) angeordnet sind, und zum Ausgeben einzelner Erfassungssignale (IR2, IR 3) geeignet sind, aufweist.

7. Vorrichtung gemäß Anspruch 1, **dadurch gekennzeichnet, dass** sie ein Mittel (100) aufweist, das zum Ausgeben eines Alarmsignals (AL, VL) als Reaktion auf das Erfassungssignal (IR1-IR3), das durch das zumindest eine Paar von empfindlichen Elementen (10-11, 50-51, 60-61) erzeugt wird, geeignet ist.

8. Vorrichtung gemäß Anspruch 1, **dadurch gekennzeichnet, dass** sie ein Mittel (100) aufweist, das zum Ausgeben eines Signals (BL) zum Festsetzen der Schneidklinge (2) als Reaktion auf das Erfassungssignal (IR1-IR3), das durch das zumindest eine Paar von empfindlichen Elementen (10-11, 50-51, 60-61) erzeugt wird, geeignet ist.

9. Rasenmäher, der eine Grasschneidklinge (2), einen Behälter (3) und einen Tunnel (1) zum Befördern des geschnitten Grases in den Behälter (3) aufweist, wobei der Rasenmäher eine Vorrichtung zum Erfassen des Grasdurchgangs in dem Tunnel, wie in einem der vorangehenden Ansprüche definiert, aufweist.

## Revendications

1. Dispositif pour détecter le passage de l'herbe dans un tunnel de collecte (1) d'une tondeuse à gazon, ladite tondeuse à gazon comprenant au moins une lame de coupe (2) et un conteneur (3) et ledit tunnel étant approprié pour transporter l'herbe coupée jusqu'au conteneur, **caractérisé en ce qu'**il comprend au moins une paire d'éléments sensibles (10-11, 50-51, 60-61) qui sont sensibles à l'humidité de l'herbe, les éléments de ladite paire d'éléments sensibles (10-11, 50-51, 60-61) étant agencés à l'opposé l'un de l'autre à l'intérieur du tunnel et étant alimentés électriquement (80), ladite au moins une paire d'éléments sensibles (10-11, 50-51, 60-61) générant un signal de détection (IR1-IR3) lorsqu'une quantité d'herbe mouillée recouvre ladite au moins une paire d'éléments sensibles afin de former un passage électrique entre les éléments sensibles de la paire.

2. Dispositif selon la revendication 1, **caractérisé en ce que** les éléments sensibles de ladite au moins une paire (10-11, 50-51, 60-61) sont deux électrodes métalliques réalisées avec un matériau électriquement conducteur.

3. Dispositif selon la revendication 2, **caractérisé en ce que** les éléments de ladite au moins une paire (10-11, 50-51, 60-61) des éléments sensibles sont réalisés avec un acier inoxydable.

4. Dispositif selon la revendication 1, **caractérisé en ce que** ledit tunnel (1) a une forme tubulaire et les éléments sensibles de ladite au moins une paire d'éléments sensibles (10-11, 50-51, 60-61) sont fixés sur la paroi interne (20) dudit tunnel (1).

5. Dispositif selon la revendication 1, **caractérisé en ce que** ledit tunnel comprend une ouverture (5) en correspondance avec l'ouverture du conteneur (3), ladite au moins une paire d'éléments sensibles (10, 11) étant agencée de manière adjacente à ladite ouverture (5).

6. Dispositif selon la revendication 1, **caractérisé en ce qu'**il comprend au moins deux paires d'éléments sensibles (50-51, 60-61) agencées dans différentes positions dans le tunnel (1) et appropriées pour émettre des signaux de détection uniques (IR2, IR3).

7. Dispositif selon la revendication 1, **caractérisé en ce qu'**il comprend des moyens (100) appropriés pour émettre un signal d'alarme (AL, VL) en réponse au signal de détection (IR1-IR3) généré par ladite au moins une paire d'éléments sensibles (10-11, 50-51, 60-61).

8. Dispositif selon la revendication 1, **caractérisé en ce qu'**il comprend des moyens (100) appropriés pour émettre un signal (BL) afin de bloquer la lame de coupe (2) en réponse au signal de détection (IR1-IR3) généré par ladite au moins une paire d'éléments sensibles (10-11, 50-51, 60-61).

9. Tondeuse à gazon comprenant une lame de coupe d'herbe (2), un conteneur (3) et un tunnel (1) pour transporter l'herbe coupée dans le conteneur (3), ladite tondeuse à gazon comprenant un dispositif pour détecter le passage de l'herbe dans le tunnel, tel que défini dans l'une quelconque des revendications précédentes.
